# FASCICULE DE BREVET EUROPEEN

(11) **EP 2 783 062 B1**
(45) Date de publication et mention de la délivrance du brevet: **17.06.2020**
(21) Numéro de dépôt: 12791172.5
(22) Date de dépôt: 23.11.2012
(51) Int. Cl.: E06B 9/72, H02K 7/116

(54) **ACTIONNEUR ÉLECTRIQUE TUBULAIRE D'ENTRAÎNEMENT POUR UN ÉCRAN DOMOTIQUE, PROCÉDÉ D'ASSEMBLAGE D'UN TEL ACTIONNEUR ET INSTALLATION COMPRENANT UN TEL ACTIONNEUR**
ROHRFÖRMIGES ELEKTRISCHES STELLGLIED FÜR EINEN HEIMAUTOMATISIERUNGSBILDSCHIRM,. VERFAHREN ZUR MONTAGE EINES SOLCHEN STELLGLIEDES UND ANLAGE MIT EINEM SOLCHEN STELLGLIED
TUBULAR ELECTRIC DRIVE ACTUATOR FOR A HOME-AUTOMATION SCREEN, METHOD OF ASSEMBLING SUCH AN ACTUATOR AND INSTALLATION COMPRISING SUCH AN ACTUATOR

(30) Priorité: 24.11.2011 FR 1160753
(43) Date de publication de la demande: 01.10.2014
(73) Titulaire: SOMFY ACTIVITES SA, 74300 Cluses (FR)
(72) Inventeur: MAGLI, Denis, F-74440 Taninges (FR)
(74) Mandataire: Lavoix
(86) Numéro de dépôt international: PCT/EP2012/073488
(87) Numéro de publication internationale: WO 2013/076256

(56) Documents cités:
- WO-A1-2008/110334
- WO-A1-2008/110334
- FR-A1- 2 872 196
- US-A1- 2006 086 874

## Description

L'invention a trait à un procédé d'assemblage d'un actionneur électrique tubulaire utilisé pour l'entraînement, autour d'un axe de rotation, d'un tube d'enroulement d'un écran de fermeture, de protection solaire ou de projection.

Il est connu d'utiliser, notamment dans le domaine des dispositifs de fermeture ou de protection solaire, des actionneurs électriques tubulaires qui comprennent un réducteur entraîné par un moteur électrique et dont l'arbre de sortie est en prise avec une couronne, elle-même solidaire en rotation d'un tube d'enroulement d'un écran ou d'un tablier. Ce type d'actionneur donne globalement satisfaction, en particulier à cause de sa compacité.

Il est connu, par exemple de WO-A-2004/004095 ou de EP-A-1 885 045 d'introduire certaines parties d'un tel actionneur dans son tube externe fixe par une première extrémité, alors que d'autres parties de cet actionneur sont introduites par une deuxième extrémité. Ceci nécessite une solidarisation et/ou une connexion électrique en aveugle de certains éléments constitutifs de l'actionneur, à l'intérieur de son tube externe fixe. Des connecteurs particuliers ont été développés en ce sens, comme cela ressort de WO-A-2004/004095. La position angulaire des matériels disposés à l'intérieur du tube doit être repérée, comme cela ressort, par exemple de EP-A-1 885 045. Dans les matériels connus, des efforts relativement intenses doivent être appliqués sur les éléments constitutifs de l'actionneur qui sont disposés à l'intérieur du tube, pour les mettre en place. Ceci provient notamment du fait que certains au moins de ces matériels sont montés serrés à l'intérieur du tube. Un effort axial, dit effort de chassage, d'une intensité pouvant atteindre 10000 Newton (N) doit ainsi être appliqué sur certaines parties de l'actionneur, ce qui impose de les dimensionner de façon à résister à un tel effort et peut conduire à endommager certaines pièces, en cas de défaut d'alignement.

Il est par ailleurs connu, par exemple de JP-A-11-294047 de disposer certaines parties d'un actionneur électrique à l'intérieur d'une coque bipartite qui, une fois constituée, remplit la fonction d'un tube externe d'un actionneur tubulaire classique. Une telle coque bipartite est relativement délicate et onéreuse à produire et à assembler. Elle est en outre moins résistante qu'un tube monobloc.

Il est également connu de WO-A-2008/110334 de monter une bague bipartite entre un corps tubulaire et une partie d'une unité de pilotage d'un actionneur électrique. Ceci n'a pas d'influence sur le positionnement relatif du moto-réducteur et du corps tubulaire de cet actionneur.

FR-A-2 872 196 divulgue un dispositif de volet roulant dans lequel plusieurs organes sont montés serrés dans un carter, sans qu'il soit envisagé d'utiliser une section non circulaire.

US-A-2006/086874 divulgue un actionneur comprenant un moteur, un frein et un réducteur insérés dans un tube, sans qu'il soit possible de savoir comment a lieu leur insertion.

C'est à ces inconvénients qu'entend plus particulièrement remédier l'invention en proposant un nouveau procédé d'assemblage d'un actionneur électrique tubulaire d'entraînement qui permet d'utiliser un tube extérieur monobloc et à section circulaire, sans nécessiter d'effort de chassage intense ou de manipulation en aveugle pour la connexion de ses parties constitutives.

A cet effet, l'invention concerne un procédé d'assemblage d'un actionneur électrique tubulaire d'entraînement, autour d'un axe de rotation, d'un tube d'enroulement d'un écran de fermeture, de protection solaire ou de projection. Cet actionneur comprend au moins un moteur électrique, un réducteur entraîné par ce moteur électrique, une unité de commande du moteur électrique, une tête d'interface avec une structure formant support, ainsi qu'un tube à section circulaire de réception du moteur électrique, du réducteur, de l'unité de commande et de la tête d'interface dans une configuration où un arbre de sortie du réducteur dépasse au-delà d'une première extrémité du tube et où la tête d'interface dépasse au-delà d'une deuxième extrémité de ce tube opposée à la première extrémité. Conformément à l'invention, ce procédé d'assemblage comprend des étapes consistant à :
a) ménager, sur la périphérie d'une première extrémité du réducteur tournée vers son arbre de sortie, au moins un premier relief tel que cette extrémité n'est pas à section circulaire ;
b) constituer, à l'extérieur du tube, un ensemble comprenant, dans cet ordre, au moins le réducteur, le moteur, l'unité de commande et la tête d'interface, en solidarisant en rotation chacun des éléments de cet ensemble avec chaque élément adjacent ;
c) introduire, dans le tube et à travers sa deuxième extrémité, l'ensemble constitué à l'étape c), en commençant par le réducteur, jusqu'à ce que l'arbre de sortie du réducteur dépasse de la première extrémité du tube ;
d) solidariser en rotation le réducteur et le tube par un deuxième relief, ménagé au niveau de la première extrémité du tube et tel que cette extrémité n'est pas à section circulaire, de sorte que le deuxième relief vienne en prise avec le premier relief.

Grâce à l'invention, la constitution de l'ensemble formé du réducteur, du moteur, de l'unité de commande et de la tête d'interface, à l'extérieur du tube de l'actionneur permet à l'opérateur d'accéder directement à ces matériels, ce qui facilite leur raccordement électrique et leur mise en continuité mécanique. L'introduction de l'ensemble ainsi constitué à l'intérieur du tube, jusqu'à ce que les premier et deuxième reliefs viennent en prise l'un avec l'autre, ou jusqu'à ce que ces reliefs soient constitués, assure une immobilisation relative en rotation de l'ensemble préconstitué et du tube, sans qu'il soit nécessaire d'utiliser un montage serré des parties constitutives de cet ensemble dans le tube. Ainsi, l'effort de chassage de l'ensemble dans le tube peut être d'intensité modérée, ce qui facilite le travail de l'opérateur et limite les risques d'endommagement de ces matériels en cours de montage. Selon des aspects avantageux mais non obligatoires de l'invention, un tel procédé peut incorporer une ou plusieurs des caractéristiques suivantes prises dans toute combinaison techniquement admissible :
- Le deuxième relief est formé sur le tube avant l'insertion de l'ensemble dans le tube.
- Le deuxième relief est formé sur le tube suite à l'insertion de l'ensemble dans le tube, par déformation plastique du tube conformément au premier relief.
- Il est prévu une étape f) supplémentaire, postérieure à l'étape d) et consistant à immobiliser la tête d'interface en rotation par rapport au tube, au voisinage de la deuxième extrémité de ce tube.
- Il est prévu une étape supplémentaire g), postérieure à l'étape d) et consistant à rattraper les jeux axiaux au sein de l'ensemble constitué à l'étape b) par sertissage de la première extrémité du tube autour de la première extrémité du réducteur, ou par insertion d'une partie de la tête d'interface au niveau de la deuxième extrémité du tube.
- Lors de l'étape b), l'ensemble est constitué avec une possibilité de déplacement axial relatif de ses éléments constitutifs, notamment entre le moteur électrique et l'unité de commande.

L'invention concerne également un actionneur électrique tubulaire d'entraînement, du type mentionné ci-dessus et qui peut être assemblé grâce au procédé mentionné ci-dessus. Conformément à l'invention, la première extrémité du tube est à section non circulaire et en prise avec une première extrémité du réducteur, également à section non circulaire et tournée vers son arbre de sortie, le tube et le réducteur étant solidaires en rotation autour de l'axe, au niveau de leurs premières extrémités respectives.

Selon des aspects avantageux mais non obligatoires de l'invention, un tel actionneur peut incorporer une ou plusieurs des caractéristiques suivantes, prises dans toute combinaison techniquement admissible :
- Le réducteur, le moteur électrique, l'unité de commande et la tête d'interface comprennent des moyens de solidarisation en rotation de l'un à l'autre.
- Le réducteur, le moteur électrique et l'unité de commande sont montés avec possibilité de coulissement axial à l'intérieur du tube.
- La première extrémité du tube est sertie autour de la première extrémité du réducteur.
- Des moyens de raccordement électrique entre le moteur et l'unité de commande sont compatibles avec un mouvement d'écartement ou de rapprochement axial relatif du moteur et de l'unité de commande. En particulier, ces moyens de raccordement restent enfichés lors d'un tel mouvement.
- Le réducteur, le moteur électrique et/ou l'unité de commande est pourvu, sur sa périphérie, de parties élastiques en appui glissant contre une surface radiale interne du tube.

L'invention concerne enfin une installation de fermeture, de protection solaire ou de projection comprenant un écran, un tube d'enroulement de cet écran et un actionneur tel que mentionné ci-dessus en place dans le tube d'enroulement, dans une configuration d'entraînement en rotation de ce tube autour d'un axe de rotation.

L'invention sera mieux comprise et d'autres avantages de celle-ci apparaîtront plus clairement à la lumière de la description qui va suivre d'un mode de réalisation d'un procédé d'assemblage, d'un actionneur et d'une installation conformes à son principe, donnée uniquement à titre d'exemple et faite en référence aux dessins annexés dans lesquels :
- la figure 1 est une illustration schématique de principe d'un actionneur conforme à l'invention utilisé au sein d'une installation de fermeture conforme à l'invention,
- la figure 2 est une représentation schématique de côté de certains éléments constitutifs de l'actionneur de la figure 1 avant montage,
- la figure 3 est une vue d'extrémité du réducteur dans le sens de la flèche III à la figure 2,
- la figure 4 est une coupe longitudinale d'un tube appartenant à l'actionneur de la figure 1,
- la figure 5 est une coupe selon la ligne V-V à la figure 4,
- la figure 6 est une vue de côté à plus petite échelle de certains éléments constitutifs de l'actionneur en cours d'assemblage,
- la figure 7 est une vue de côté, à l'échelle de la figure 6, de certains autres éléments de l'actionneur de la figure 1 en cours d'assemblage,
- la figure 8 est une vue de côté des éléments représentés aux figures 6 et 7, au cours d'une étape suivante d'assemblage,
- la figure 9 est une vue de côté des éléments représentés à la figure 8 et une coupe du tube représenté à la figure 4, au cours d'une étape suivante d'assemblage,
- la figure 10 est une coupe longitudinale de l'actionneur lors d'une étape de contrôle postérieure à l'étape de la figure 9, les éléments visibles à la figure 2 étant représentés en vue de côté, comme sur cette figure,
- la figure 11 est une vue analogue à la figure 10 lors d'une étape suivante d'assemblage et
- la figure 12 représente une étape optionnelle d'un procédé de fabrication de l'actionneur des figures précédentes.

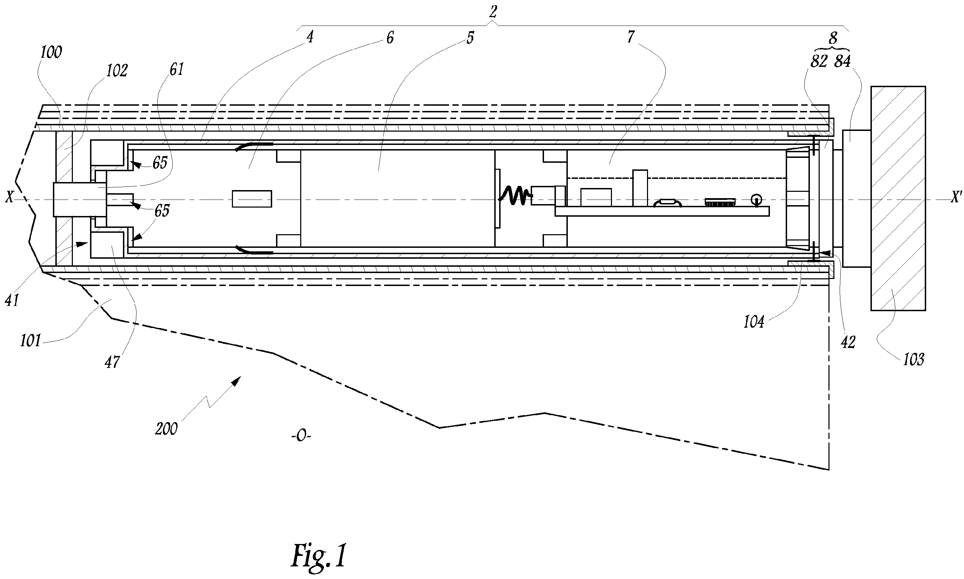

La figure 1 représente schématiquement un actionneur tubulaire rotatif 2 destiné à entraîner en rotation, autour d'un axe sensiblement vertical X-X', un tube d'enroulement 100 sur lequel peut être plus ou moins enroulé un écran ou tablier 101 d'obturation sélective d'une ouverture O. L'ouverture O est, par exemple, une ouverture ménagée dans les parois d'un bâtiment, telle qu'une fenêtre ou une porte. L'installation 200 à laquelle appartiennent l'actionneur 2, le tube 100 et le tablier 101 est ainsi une installation de fermeture sélective de l'ouverture O.

L'actionneur 2 comprend un tube 4 cylindrique et fixe, dans lequel sont montés un moteur électrique 5, un réducteur 6 entraîné par le moteur 5 et une unité électronique 7 de commande du moteur 5. Le tube 4 est à section circulaire sur l'essentiel de sa longueur L4, entre ses extrémités.

Le réducteur 6 inclut, de façon avantageuse, un frein qui peut être de type frein à ressort ou d'un autre type. En variante, l'actionneur 2 peut inclure un frein distinct du réducteur 6 et intercalé entre le moteur 5 et ce réducteur.

L'arbre de sortie 61 du réducteur 6 entraîne une couronne-roue 102 solidaire en rotation du tube 100.

L'actionneur 2 comprend également un point fixe bipartite 8 formé d'une partie 82, dite interne et qui est partiellement engagée à l'intérieur du tube 4, ainsi que d'une partie 84, dite externe, qui coopère mécaniquement avec la partie 82 et réalise l'interface avec un bâti fixe 103 qui forme un support pour l'installation 200. Le point fixe 8 peut être conforme à l'enseignement technique de EP-A-2 248 987. En variante, d'autres types de points fixes peuvent être utilisés avec l'invention, notamment un point fixe monobloc.

On note 41 l'extrémité du tube 4 au-delà de laquelle dépasse l'arbre 61 pour attaquer la couronne-roue 102. On note 42 l'extrémité du tube 4 opposée à l'extrémité 41. La partie 82 du point fixe 8 est partiellement engagée dans l'extrémité 42 du tube 4.

Sous l'action de la couronne-roue 102, le tube d'enroulement 100 tourne autour de l'axe X-X' et du tube fixe 4 grâce à deux liaisons pivot. Une couronne-palier 104, montée sur la périphérie extérieure du tube 4 à proximité de son extrémité 42 assure une première liaison pivot. La deuxième liaison pivot est installée à l'autre extrémité du tube 100. Elle n'est pas représentée sur les figures.

En fonctionnement de l'actionneur 2, le moteur 5 entraîne le réducteur 6 dont l'arbre de sortie 61 entraîne le tube 100 par l'intermédiaire de la couronne-roue 102. Par exemple, lorsque l'actionneur 2 est installé dans un caisson de volet roulant, la rotation de l'arbre 61 entraîne l'ouverture, et, en alternance, la fermeture de l'ouverture O par l'écran 101 dont une partie inférieure se déplace verticalement dans l'ouverture O, entre une position haute d'ouverture et une position basse de fermeture.

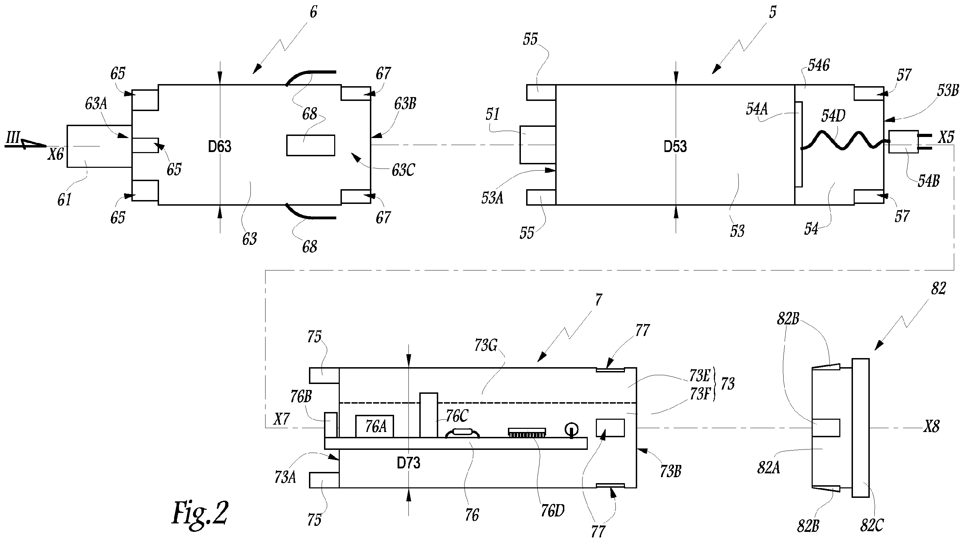

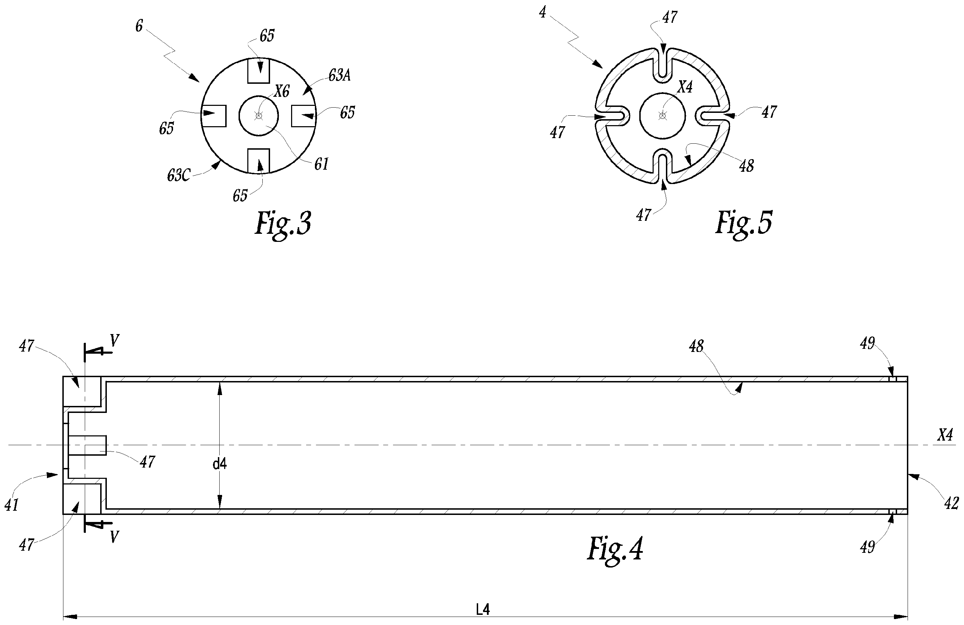

Comme cela ressort plus particulièrement des figures 2 et 3, le réducteur 6 comprend un corps 63 globalement cylindrique et à section circulaire. Le diamètre extérieur D63 du corps 63 est strictement inférieur au diamètre intérieur d4 du tube 4. On note 63A l'extrémité du corps 63 à partir de laquelle fait saillie l'arbre 61. On note X6 l'axe central du réducteur 6 qui est un axe de symétrie de la partie cylindrique à base circulaire du corps 63. L'arbre 61 est centré sur l'axe X6 et dépasse au-delà du corps 63 le long de cet axe.

L'extrémité 63A du corps 63 est pourvue de quatre encoches 65 régulièrement reparties sur sa périphérie, autour de l'axe X6, c'est-à-dire ménagées au voisinage de la surface radiale externe du corps 63 et décalées angulairement l'une de l'autre de 90° par rapport à l'axe X6. Ainsi, comme cela ressort de la figure 3, l'extrémité 63A n'est pas à section circulaire. En d'autres termes, elle est à section non circulaire. Le corps du réducteur peut comprendre, au niveau de l'extrémité 63A à partir de laquelle l'arbre 61 fait saillie, un embout n'ayant pas de fonction de réduction de vitesse mais sur lequel sont imprimées les encoches ou reliefs 65. La notion de réducteur utilisée dans la demande concerne donc également cette variante où un embout appartient au réducteur et comporte les reliefs 65. Cet embout peut par exemple être un dispositif de suspension, solidarisé en rotation avec l'extrémité du réducteur.

A proximité de son extrémité axiale 63B opposée à l'extrémité axiale 63A, le corps 63 est pourvu de deux logements en creux 67 diamétralement opposés par rapport à l'axe X6.

Le corps 63 porte, sur sa périphérie, quatre pattes 68 élastiquement déformables qui dépassent radialement vers l'extérieur du corps 63, par rapport à sa surface radiale externe circulaire 63C. Les pattes 68 peuvent être réalisées en métal ou en matériau synthétique. Elles sont rapportées sur le corps 63 par tout moyen approprié, par exemple par soudage ou collage. En variante, elles peuvent être monobloc avec ce corps. En pratique des évidements et/ou des affaiblissements de la matière à l'intérieur du corps 63 permettent de rendre celui-ci déformable élastiquement au niveau de certaines parties souples qui assurent la fonction de pattes élastiques 68.

Le moteur 5 comprend un arbre de sortie 51 destiné à être mis en prise avec un arbre d'entrée creux du réducteur 6 qui n'est pas visible sur les figures. L'arbre 51 fait saillie axialement, le long d'un axe central X5 de l'actionneur 5, par rapport à un corps 53 de ce moteur qui est cylindrique à section circulaire centrée sur l'axe X5 et dont on note D53 le diamètre extérieur, lequel est sensiblement égal au diamètre D63. Le stator et le rotor du moteur 5 sont logés dans le corps 53 et ne sont pas visibles sur les figures. Le moteur 5 comprend également un module électrique 54 comprenant une carte d'alimentation 54A et un connecteur 54B logés à l'intérieur d'une enveloppe en matériau synthétique 54C qui prolonge le corps 53 à l'opposé de son extrémité 53A à partir de laquelle s'étend l'arbre 51. Sur les dessins, l'enveloppe 54C est représentée transparente pour faciliter le repérage des éléments qu'elle contient. En pratique, l'enveloppe 54C peut être opaque. Le connecteur 54B est monté à l'extrémité libre d'un toron de câbles électriques 54D qui est souple.

Le corps 53 est pourvu, au niveau de son extrémité 53A de pions 55 qui font saillie dans le même sens que l'arbre 51 par rapport à l'extrémité 53A, qui sont diamétralement opposés par rapport à l'axe X5 et qui sont dimensionnés pour être respectivement reçus dans les logements creux 67 du réducteur 6.

On note par ailleurs 53B l'extrémité du moteur 5 opposée à l'extrémité 53A, cette extrémité 53B étant formée par l'enveloppe 54C. Au niveau de cette extrémité 53B, le moteur 5 est équipé de deux logements en creux 57.

L'unité électronique 7 comporte une carte de circuit imprimé 76 qui supporte mécaniquement et relie électriquement entre eux des composants électroniques permettant d'alimenter et de contrôler le moteur 5. Ces composants électroniques incluent un condensateur 76A, des moyens de comptage 76C et un calculateur 76D. La carte 76 est également équipée d'un connecteur électrique 76B destiné à coopérer avec le connecteur 54B.

L'unité 7 comprend également une coque externe 73 qui est formée de deux demi-coques en matériau synthétique 73E et 73F qui sont représentées transparentes sur les figures mais qui peuvent également être opaques. La ligne 73G représente la ligne de jonction entre les demi-coques 73E et 73F. Cette coque 73 a notamment pour but de protéger la carte et les composants électroniques, ainsi que d'assurer une rigidité de l'unité 7.

On note respectivement 73A et 73B les extrémités de la coque 73 orientées vers le moteur 5 et à l'opposé de ce moteur en configuration montée de l'actionneur 2.

La coque 73 est cylindrique à section circulaire et l'on note D73 son diamètre extérieur qui est sensiblement égal aux diamètres D53 et D63.

Au niveau de son extrémité 73A, la coque 73 est pourvue de deux pions 75 destinés à être respectivement engagés et à venir en prise dans les logements 57.

Au voisinage de l'extrémité 73B et à distance de cette extrémité, la coque 73 est percée de quatre ouvertures 77 régulièrement reparties autour d'un axe central X7 de l'unité 7 qui est un axe de symétrie pour la partie circulaire de la coque 73.

La partie 82 du point fixe 8 comprend un manchon 82A dont le diamètre est adapté pour lui permettre d'être introduit dans la coque 73 à travers l'extrémité 73B et qui porte quatre pattes 82B élastiquement déformables et régulièrement reparties autour d'un axe central X8 du point fixe 8. La partie 82 comprend également un plateau 82C destiné à venir en appui contre l'extrémité 42 du tube 4 et à recevoir en appui la partie externe 84, ainsi que des reliefs non visibles sur les figures permettant une reprise de couple entre les parties 82 et 84.

Comme cela ressort plus particulièrement des figures 4 et 5, le tube 4 est pourvu, au niveau de son extrémité 41, de quatre zones 47 déformées radialement vers l'intérieur, c'est-à-dire en direction d'un axe central X4 du tube 4. La déformation réalisée au niveau des zones 47 peut être obtenue par matriçage. Ainsi, comme cela ressort de la figure 5, l'extrémité 41 n'est pas à section circulaire. En d'autres termes, elle est à section non circulaire.

La géométrie des encoches 65 et des zones déformées 47 est prévue pour que les zones déformées 47 puissent être au moins partiellement engagées dans les encoches 65 lorsque le réducteur 6 est en place dans le tube 4 au point que son arbre 61 dépasse de l'extrémité 41. Ceci permet de solidariser en rotation le réducteur 6 et le tube 4 autour des axes X4 et X6 qui sont alors confondus.

La coopération des pions 55 et des logements 67 permet de solidariser en rotation le moteur 5 et le réducteur 6. Par ailleurs, la coopération des pions 75 et des logements 57 permet de solidariser en rotation le moteur 5 et l'unité de commande 7. Enfin, la coopération des pattes 82B et des ouvertures 77 permet de solidariser en rotation l'unité électronique 7 et la partie 82 du point fixe 8.

Ainsi, les différents reliefs 55, 57, 67, 75, 77 et 82B permettent de solidariser en rotation, autour des axes X6, X5, X7 et X8, les éléments de l'actionneur 2 qui sont destinés à être introduits dans le tube 4. Par ailleurs, les reliefs 65 et 47 permettent de solidariser en rotation le réducteur 6, et par voie de conséquence, les éléments 5, 7 et 82, avec le tube 4.

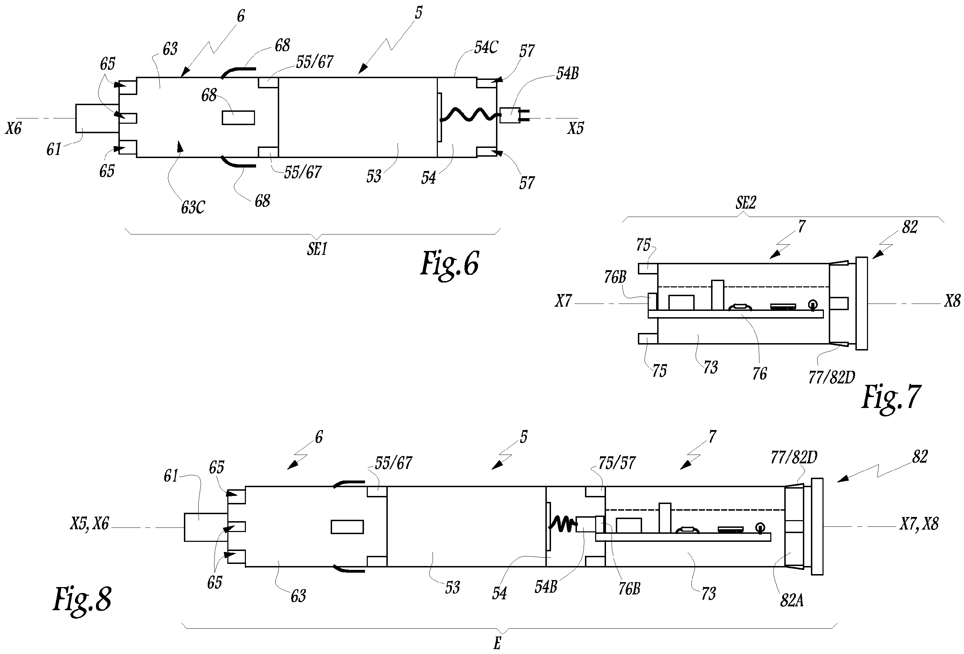

Lors de l'assemblage de l'actionneur 2, un premier sous-ensemble SE1 est constitué en alignant les axes X5 et X6 et en amenant en prise l'arbre 51 avec l'arbre d'entrée du réducteur 6 ainsi que les pions 55 avec les logements 67. Les éléments 5 et 6 sont alors solidarisés en rotation autour des axes X5 et X6 confondus. Le premier sous-ensemble SE1 est visible à la figure 6.

Par ailleurs, un deuxième sous-ensemble SE2 est constitué en introduisant le manchon 82A de la partie 82 dans l'extrémité 73B de la coque 73 après avoir aligné les axes X7 et X8. De part la coopération des pattes 82B et des ouvertures 77, la partie 82 est accrochée sur l'unité 7 et ces éléments sont immobilisés en rotation l'un par rapport à l'autre, autour des axes X7 et X8 alors confondus. Le deuxième sous-ensemble SE2 est visible à la figure 7.

Il est alors possible de constituer un ensemble E tel que visible à la figure 8 en alignant les axes X5 et X6, d'une part, avec les axes X7 et X8, d'autre part, et en raccordant les connecteurs 54B et 76B puis en amenant en prise les pions 75 avec les logements 57. Les sous-ensembles SE1 et SE2 sont alors immobilisés en rotation l'un par rapport à l'autre autour des axes X5, X6, X7 et X8 alors confondus.

Les opérations de constitution des sous-ensembles SE1 et SE2 et de l'ensemble E sont réalisés sur un gabarit non représenté qui guide les éléments 5, 6, 7 et 82 pour l'alignement de leurs axes centraux. Ces éléments sont alors aisément accessibles, ce qui facilite le raccordement électrique des connecteurs 54B et 76B et l'introduction des pions 55 et 75 et des pattes 82B respectivement dans les logements 67 et 57 et dans les ouvertures 77. La tâche de l'opérateur est ainsi facilitée, notamment car il n'a pas à travailler en aveugle, ce qui serait le cas si l'assemblage de l'ensemble E avait lieu à l'intérieur du tube 4.

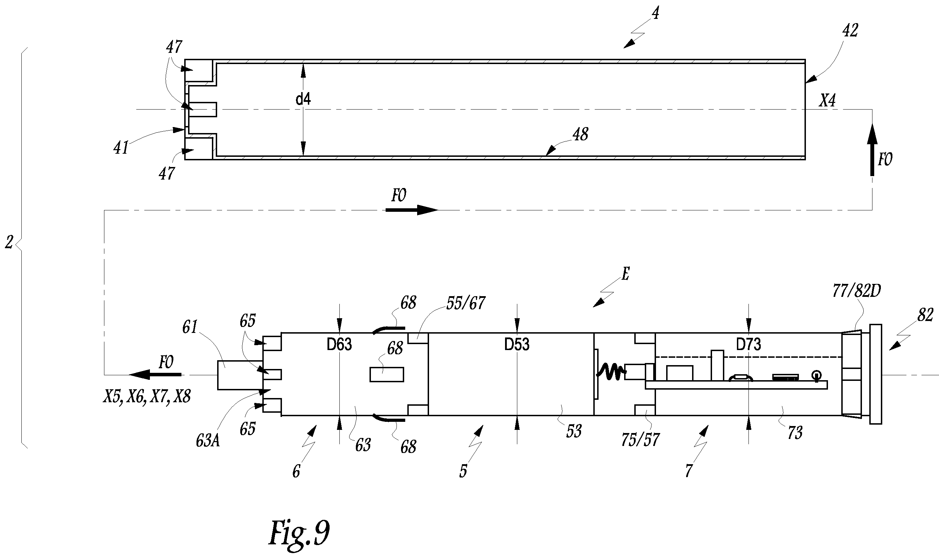

Une fois l'ensemble E constitué, et comme représenté à la figure 9, il est possible d'aligner les axes X5 à X8, d'une part, avec l'axe X4, d'autre part et d'introduire l'ensemble E dans le tube 4 à travers son extrémité 42, jusqu'à amener en prise les encoches 65 avec les zones déformées 47. Ce mouvement est représenté par les flèches F0 à la figure 9. Il est poursuivi jusqu'à ce que le réducteur 6 vienne en butée contre l'extrémité 41 et que son arbre de sortie 61 dépasse de cette extrémité, à l'extérieur du tube 4. Lors de ce mouvement, les pattes 68 glissent sur la surface radiale interne 48 du tube 4, ce qui permet de centrer les axes X5, X6, X7 et X8 par rapport à l'axe X4 dans le tube 4 et de quantifier l'effort de chassage à exercer pour mettre en place l'ensemble E dans le tube 4. Comme les diamètres D53, D63 et D73 sont strictement inférieurs au diamètre d4, les frottements entre les corps 53 et 63 et la coque 73, d'une part, et la surface 48, d'autre part, peuvent être considérés comme négligeables par rapport aux frottements dus aux pattes 68. Par un choix judicieux de la géométrie et du matériau constitutif des pattes 68, il est possible que l'effort de chassage à exercer soit relativement faible, notamment inférieur à 500 N, voire inférieur à 300 N, ce qui est bien inférieur aux efforts nécessaires pour le montage des matériels classiques dans lesquels les corps du réducteur du moteur et/ou de l'unité de commande frottent contre la surface radiale interne du tube, voire sont montés serrés dans ce tube pour éviter une rotation ultérieure. Ainsi, la tâche de l'opérateur est facilitée car il doit exercer un effort d'intensité relativement faible. Les pattes participent également à la suspension de l'ensemble E dans le tube 4, de sorte à limiter la transmission directe de vibrations depuis la surface de l'ensemble E vers le tube 4.

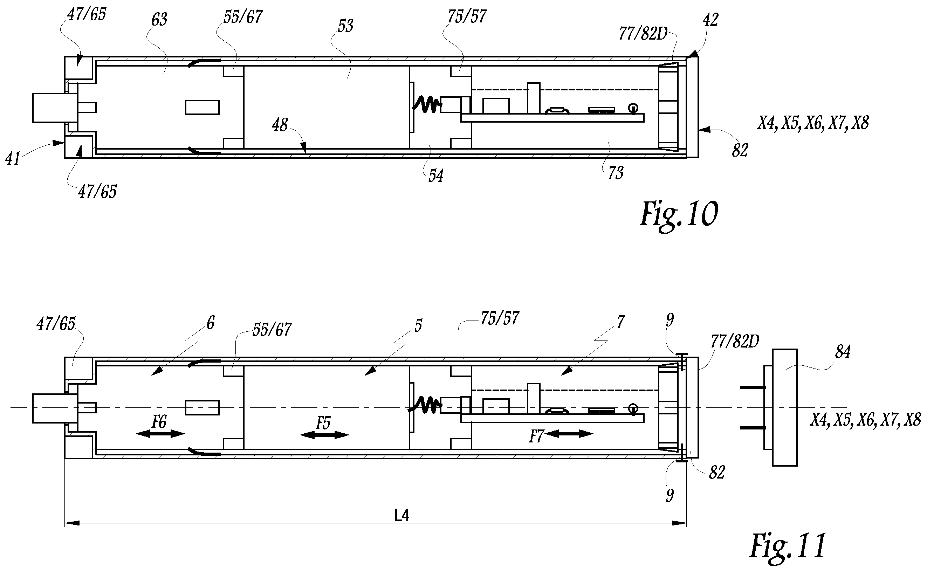

On parvient alors dans la configuration de la figure 10 où il est possible d'alimenter électriquement l'unité 7 pour vérifier son bon fonctionnement, notamment en détectant la rotation de l'arbre 61 qui dépasse du tube 4. Dans cette étape, on teste le fonctionnement de certains au moins des composants de l'ensemble E, notamment l'unité électronique 7 et le module 54. En effet, si l'un d'entre eux ne fonctionne pas, l'arbre 61 ne tourne pas. Cette étape permet ainsi de tester le fonctionnement du moteur 5 et du réducteur 6, par exemple en mesurant la vitesse de rotation de l'arbre de sortie 61 et/ou le couple qu'il transmet.

Dans la mesure où l'ensemble E est immobilisé en rotation autour de l'axe X4 à cause des reliefs 47 et 65, il n'est pas nécessaire de visser ou riveter cet ensemble dans le tube 4 avant de procéder à cette opération de vérification. Ainsi, en cas de dysfonctionnement constaté, l'ensemble E peut être aisément extrait du tube 4 pour vérification, grâce à un effort de sens inverse des flèches F0, et aucune partie de cet ensemble E ne doit être a priori mise au rebut, ce qui aurait été le cas si l'une de ces parties avait été percée, par exemple par une vis auto-taraudeuse.

Lorsque le fonctionnement de l'ensemble E a été vérifié, il est possible d'immobiliser axialement cet ensemble dans le tube 4 au moyen de deux vis 9 qui traversent deux ouvertures 49 diamétralement opposées du tube 4 et le manchon 82A, comme représenté à la figure 11. Les vis 9 sont, par exemple, des vis auto-taraudeuses qui maintiennent le manchon 82A par rapport au tube 4, après leur mise en place. En variante, des rivets ou d'autres moyens d'immobilisation axiale de la partie 82 dans le tube 4 peuvent être envisagés. La reprise du contre-couple est alors assurée par le tube 4 lui-même.

Dans cette configuration, les éléments 5, 6 et 7 sont montés avec une possibilité de coulissement axial à l'intérieur du tube 4, comme représenté par les flèches F5, F6 et F7 à la figure 11. En effet, la coopération des reliefs 47 et 65, 67 et 55, 57 et 75 permet un débattement axial des éléments 5, 6, 7 l'un par rapport à l'autre le long de l'axe X4. Ceci permet de rattraper des tolérances de fabrication pouvant aller jusqu'à 4 mm pour un tube 4 dont la longueur L4 est de l'ordre de 450 à 500 mm. Ces tolérances de fabrication peuvent, en pratique, représenter jusqu'à 2% de la longueur L4 du tube 4. A cet égard, le caractère souple du toron de câbles 54D permet d'accommoder un déplacement axial relatif entre les éléments 5 et 7, tout en gardant les connecteurs 54B et 76B enfichés l'un dans l'autre. Le déplacement axial du réducteur 6 dans le tube 4 est toutefois freiné grâce à l'élasticité des pattes 68 en appui contre la surface 48. Dans le cas où des parties monobloc avec le corps 63 assurent la fonction de ces pattes, ce sont ces parties qui sont en appui contre la surface 48.

Ce jeu axial peut être au moins en partie rattrapé lors du montage d'une ou des parties du point fixe 8.

Après mise en place des vis 9, la partie externe 84 du point fixe 8 est rapportée sur la partie 82. La partie 84 peut être sélectionnée, notamment, en tenant compte du type du bâti 103 et de sa géométrie ou d'un choix de personnalisation de l'actionneur. Dans cette configuration, le point fixe 8 forme une tête d'interface avec le bâti 103. Ce point fixe est partiellement engagé, par son manchon 82A, dans le tube 4 et il dépasse de ce tube par ses parties 82C et 84.

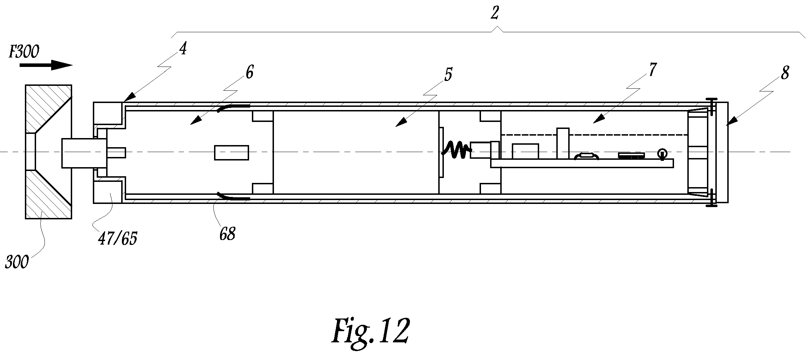

Selon un aspect de l'invention qui n'a pas à être systématiquement mis en oeuvre mais qui peut s'avérer avantageux, il est possible de sertir en position les éléments 5, 6 et 7 à l'intérieur du tube 4, après mise en place des vis 9. Dans ce cas, comme représenté par la flèche F300 à la figure 12, une tête de sertissage 300 est amenée autour de l'extrémité 41 du tube 4 pour serrer cette extrémité 41 autour de l'extrémité 63A du corps 63 et la déformer plastiquement. Ceci verrouille les zones déformées 47 dans les encoches 65, ce qui pérennise l'immobilisation en rotation de l'ensemble E par rapport au tube 4. Ceci permet également de rattraper les jeux axiaux au sein de l'ensemble E, le long de l'axe X4 dans la mesure où la tête 300 repousse les éléments 5 à 7 vers le point fixe 8 qui est immobilisé axialement dans le tube 4.

L'étape représentée à la figure 12 n'est pas obligatoire dans la mesure où, comme expliqué ci-dessus, on peut s'accommoder d'un déplacement axial de faible amplitude des éléments 5, 6 et 7 à l'intérieur du tube 4, au cours de la durée de vie de l'actionneur 2.

Le nombre des encoches 65 et des zones déformées 47 n'est pas forcement égal à quatre. Il doit donc être supérieur ou égal à 1. Il importe que les extrémités 41 et 63A soient à sections non circulaires pour assurer l'immobilisation en rotation relative du tube 4 et de l'ensemble E. Ces extrémités peuvent, en variante, être à section ovale ou polygonale, auquel cas les reliefs correspondant aux reliefs 47 et 65 sont formés par les parties de plus faible rayon de courbure ou par les angles de cette section.

De même, les reliefs de solidarisation en rotation des éléments 5, 6 et 7 entre eux peuvent être en nombre différent de deux et les pattes et ouvertures 82D et 77 peuvent être en nombre différent de quatre.

Des reliefs en saillie autres que des pions peuvent être utilisés à la place des pions 55 et 75.

Les pions 55 et 75 peuvent être remplacés par des logements en creux, auquel cas des reliefs en saillie sont prévus à la place des logements 67 et 57.

A la place des pattes 82B, d'autres moyens d'arrêt du manchon 82A dans le tube 4 peuvent être prévus, par exemple sertissage, soudage laser, collage.

A la place ou en complément des pattes 68, des pattes analogues peuvent être notamment prévues sur le corps 53, et/ou éventuellement sur la coque 73. En outre, dans le cas où un réducteur est associé au moteur, le corps du réducteur présente les mêmes parties souples formant pattes élastiques que le corps du moteur.

Selon un mode de réalisation non représenté de l'invention, l'ensemble E peut être introduit dans le tube 4 avant réalisation des zones déformées 47. Dans ce cas, ces zones sont obtenues par une déformation plastique localisée du tube 4 selon une géométrie correspondant à celle des encoches 65. Ceci peut être obtenu, notamment, par sertissage du tube 4 autour du réducteur 6.

L'invention est décrite ci-dessus dans le cadre de sa mise en œuvre au sein d'une installation de fermeture. Elle est applicable avec différents types d'écrans 101, par exemple des tabliers souples, des tabliers à lamelles ou des grilles. L'invention est également applicable dans le cadre d'une installation de protection solaire, pour la manœuvre d'un store. L'invention peut également être utilisée pour la manœuvre d'un écran de projection. Au sens de l'invention, ces différents écrans sont des écrans domotiques.

## Revendications

1. Procédé d'assemblage d'un actionneur électrique tubulaire (2) d'entraînement, autour d'un axe de rotation (X-X'), d'un tube d'enroulement (100) d'un écran (101) de fermeture, de protection solaire ou de projection, cet actionneur comprenant au moins :
- un moteur électrique (5),
- un réducteur (6) entraîné par le moteur électrique,
- une unité (7) de commande du moteur électrique,
- une tête (8) d'interface avec une structure (103) formant support et
- un tube (4), à section circulaire, de réception du moteur électrique (5), du réducteur (6), de l'unité de commande (7) et de la tête d'interface (8) dans une configuration où un arbre de sortie (61) du réducteur dépasse au-delà d'une première extrémité (41) du tube et où la tête d'interface (8) dépasse au-delà d'une deuxième extrémité (42) de ce tube opposée à la première extrémité.
**caractérisé en ce que** ce procédé comprend des étapes consistant à :
a) ménager, sur la périphérie d'une première extrémité (63A) du réducteur (6) tournée vers son arbre de sortie (61), au moins un premier relief (65) tel que cette extrémité n'est pas à section circulaire ;
b) constituer, à l'extérieur du tube, un ensemble (E) comprenant, dans cet ordre, au moins le réducteur (6), le moteur (5), l'unité de commande (7) et au moins une partie (82) de la tête d'interface (8), en solidarisant en rotation chacun des éléments de cet ensemble avec chaque élément adjacent ;
c) introduire (F0), dans le tube (4) et à travers sa deuxième extrémité (42), l'ensemble (E) constitué à l'étape c), en commençant par le réducteur (6), jusqu'à ce que l'arbre de sortie (61) du réducteur dépasse de la première extrémité (41) du tube ;
d) solidariser en rotation le réducteur (6) et le tube par un deuxième relief (47), ménagé au niveau de la première extrémité (41) du tube (4) et tel que cette extrémité n'est pas à section circulaire, de sorte que le deuxième relief (47) vienne en prise avec le premier relief (65).

2. Procédé selon la revendication 1, **caractérisé en ce que** le deuxième relief (47) est formé sur le tube (4) avant l'insertion de l'ensemble (E) dans le tube (4).

3. Procédé selon la revendication 1, **caractérisé en ce que** le deuxième relief (47) est formé sur le tube (4) suite à l'insertion de l'ensemble (E) dans le tube (4), par déformation plastique du tube conformément au premier relief (65).

4. Procédé selon l'une des revendications précédentes, **caractérisé en ce qu'**il comprend une étape supplémentaire, postérieure à l'étape d) et consistant à :
f) immobiliser la tête d'interface (8) en rotation par rapport au tube (4), au voisinage de la deuxième extrémité (42) de ce tube.

5. Procédé selon l'une des revendications précédentes, **caractérisé en ce qu'**il comprend une étape supplémentaire, postérieure à l'étape d) et consistant à :
g) rattraper les jeux axiaux au sein de l'ensemble (E) constitué à l'étape b) par sertissage (F300) de la première extrémité (41) du tube (4) autour de la première extrémité (63A) du réducteur, ou par insertion d'une partie (82) de la tête d'interface (8) au niveau de la deuxième extrémité du tube (4).

6. Procédé selon l'une des revendications précédentes, **caractérisé en ce que** lors de l'étape b), l'ensemble (E) est constitué avec une possibilité de déplacement axial (F5, F6, F7) relatif de ses éléments constitutifs, notamment entre le moteur électrique (5) et l'unité de commande (7).

7. Actionneur électrique tubulaire (2) d'entraînement, autour d'un axe de rotation (X-X'), d'un tube d'enroulement (100) d'un écran (101) de fermeture, de protection solaire ou de projection, cet actionneur comprenant
- un moteur électrique (5),
- un réducteur (6) entraîné par le moteur électrique,
- une unité (7) de commande du moteur électrique,
- une tête (8) d'interface avec une structure (103) formant support et
- un tube (4) à section circulaire de réception du moteur électrique (5), du réducteur (6), de l'unité de commande (7) et de la tête d'interface (8) dans une configuration où un arbre de sortie (61) du réducteur dépasse au-delà d'une première extrémité (41) du tube et où la tête d'interface (8) dépasse au-delà d'une deuxième extrémité (42) de ce tube opposée à la première extrémité,
**caractérisé en ce que** la première extrémité (41) du tube est à section non circulaire et en prise avec une première extrémité (63A) du réducteur (6) à section non circulaire tournée vers son arbre de sortie (61), le tube et le réducteur étant solidaires en rotation autour de l'axe (X-X'), au niveau de leurs premières extrémités respectives.

8. Actionneur selon la revendication 7, **caractérisé en ce que** le réducteur (6), le moteur électrique (5), l'unité de commande (7) et la tête d'interface (8) comprennent des moyens (57/67, 75/57, 77/82B) de solidarisation en rotation de l'un à l'autre.

9. Actionneur selon l'une des revendications 7 ou 8, **caractérisé en ce que** le réducteur (6), le moteur électrique (5) et l'unité de commande (7) sont montés avec possibilité de coulissement axial (F5, F6, F7) à l'intérieur du tube (4).

10. Actionneur selon l'une des revendications 7 ou 8, **caractérisé en ce que** la première extrémité (41) du tube (4) est sertie (300) autour de la première extrémité (63A) du réducteur (6).

11. Actionneur selon l'une des revendications 7 à 10, **caractérisé en ce que** des moyens (54B, 76B) de raccordement électrique entre le moteur (5) et l'unité de commande (7) restent enfichés l'un à l'autre lors d'un mouvement (F5, F7) d'écartement ou de rapprochement axial relatif du moteur et de l'unité de commande.

12. Actionneur selon l'une des revendications 7 à 11, **caractérisé en ce que** le réducteur (6), le moteur électrique (5) et/ou l'unité de commande (7) est pourvu, sur sa périphérie, de parties élastiques (68) en appui glissant contre une surface radiale interne (48) du tube (4).

13. Installation (200) de fermeture, de protection solaire ou de projection comprenant un écran (101), un tube (100) d'enroulement de cet écran et un actionneur (2) selon l'une des revendications 7 à 12 en place dans le tube d'enroulement, dans une configuration d'entraînement en rotation de ce tube autour d'un axe de rotation (X-X').

## Patentansprüche

1. Verfahren zum Zusammenbau eines rohrförmigen elektrischen Stellglieds (2) zum Antrieb eines Wickelrohrs (100) eines zum Schließen, zum Sonnenschutz oder zur Projektion vorgesehenen Behangs (101) um eine Rotationsachse (X-X'), wobei das Stellglied mindestens Folgendes umfasst:
- einen Elektromotor (5),
- ein durch den Elektromotor angetriebenes Getriebe (6),
- eine Einheit (7) zur Steuerung des Elektromotors,
- einen Schnittstellenkopf (8) mit einer Trägerstruktur (103) und
- ein Rohr (4) mit einem kreisförmigen Querschnitt zur Aufnahme des Elektromotors (5), des Getriebes (6), der Steuereinheit (7) und des Schnittstellenkopfes (8) in einer Ausgestaltung, in der eine Abtriebswelle (61) des Getriebes über ein erstes Ende (41) des Rohrs hinausragt und in der der Schnittstellenkopf (8) über ein dem ersten Ende gegenüberliegendes zweites Ende (42) des Rohrs hinausragt,
**dadurch gekennzeichnet, dass** das Verfahren folgende Schritte umfasst:
a) Ausbilden mindestens eines ersten Vorsprungs (65) an dem Umfang eines der Abtriebswelle (61) zugewandten ersten Endes (63A) des Getriebes (6), so dass dieses Ende im Querschnitt nicht kreisförmig ist;
b) Ausbilden einer Anordnung (E) außerhalb des Rohrs, welche in dieser Reihenfolge zumindest das Getriebe (6), den Motor (5), die Steuereinheit (7) und mindestens einen Teil (82) des Schnittstellenkopfes (8) umfasst, indem jedes der Elemente dieser Anordnung mit jedem benachbarten Element drehfest verbunden wird;
c) Einführen (F0) der in Schritt b) ausgebildeten Anordnung (E) durch das zweite Ende (42) des Rohrs in das Rohr (4), beginnend mit dem Getriebe (6), bis die Abtriebswelle (61) des Getriebes aus dem ersten Ende (41) des Rohrs herausragt;
d) drehfestes Verbinden des Getriebes (6) und des Rohrs durch einen zweiten Vorsprung (47), der im Bereich des ersten Endes (41) des Rohrs (4) ausgebildet ist, so dass dieses Ende im Querschnitt nicht kreisförmig ist, derart, dass der zweite Vorsprung (47) mit dem ersten Vorsprung (65) in Eingriff gelangt.

2. Verfahren nach Anspruch 1, **dadurch gekennzeichnet, dass** der zweite Vorsprung (47) an dem Rohr (4) ausgebildet wird, bevor die Anordnung (E) in das Rohr (4) eingeführt wird.

3. Verfahren nach Anspruch 1, **dadurch gekennzeichnet, dass** der zweite Vorsprung (47) an dem Rohr (4) durch plastische Verformung des Rohrs entsprechend dem ersten Vorsprung (65) ausgebildet wird, nachdem die Anordnung (E) in das Rohr (4) eingeführt wurde.

4. Verfahren nach einem der vorangehenden Ansprüche, **dadurch gekennzeichnet, dass** das Verfahren einen zusätzlichen Schritt umfasst, der auf Schritt d) folgt und Folgendes umfasst:
f) drehfestes Blockieren des an das zweite Ende (42) des Rohrs angrenzenden Schnittstellenkopfes (8) in Bezug auf das Rohr (4).

5. Verfahren nach einem der vorangehenden Ansprüche, **dadurch gekennzeichnet, dass** das Verfahren einen zusätzlichen Schritt umfasst, der auf Schritt d) folgt und Folgendes umfasst:
g) Ausgleichen der Axialspiele innerhalb der in Schritt b) ausgebildeten Anordnung (E), indem das erste Ende (41) des Rohrs (4) um das erste Ende (63A) des Getriebes gecrimpt (F300) wird oder indem ein Teil (82) des Schnittstellenkopfes (8) im Bereich des zweiten Endes des Rohrs (4) eingeführt wird.

6. Verfahren nach einem der vorangehenden Ansprüche, **dadurch gekennzeichnet, dass** die Ausbildung der Anordnung (E) in Schritt b) derart erfolgt, dass eine Möglichkeit zur relativen axialen Verschiebung (F5, F6, F7) ihrer Bauteile, insbesondere zwischen dem Elektromotor (5) und der Steuereinheit (7), gegeben ist.

7. Rohrförmiges elektrisches Stellglied (2) zum Antrieb eines Wickelrohrs (100) eines zum Schließen, zum Sonnenschutz oder zur Projektion vorgesehenen Behangs (101) um eine Rotationsachse (X-X'), wobei das Stellglied Folgendes umfasst:
- einen Elektromotor (5),
- ein durch den Elektromotor angetriebenes Getriebe (6),
- eine Einheit (7) zur Steuerung des Elektromotors,
- einen Schnittstellenkopf (8) mit einer Trägerstruktur (103) und
- ein Rohr (4) mit einem kreisförmigen Querschnitt zur Aufnahme des Elektromotors (5), des Getriebes (6), der Steuereinheit (7) und des Schnittstellenkopfes (8) in einer Ausgestaltung, in der eine Abtriebswelle (61) des Getriebes über ein erstes Ende (41) des Rohrs hinausragt und in der der Schnittstellenkopf (8) über ein dem ersten Ende gegenüberliegendes zweites Ende (42) des Rohrs hinausragt,
**dadurch gekennzeichnet, dass** das erste Ende (41) des Rohrs im Querschnitt nicht kreisförmig ist und mit einem der Abtriebswelle (61) zugewandten, im Querschnitt nicht kreisförmigen ersten Ende (63A) des Getriebes (6) in Eingriff steht, wobei das Rohr und das Getriebe im Bereich ihrer jeweiligen ersten Enden um die Achse (X-X') drehfest sind.

8. Stellglied nach Anspruch 7, **dadurch gekennzeichnet, dass** das Getriebe (6), der Elektromotor (5), die Steuereinheit (7) und der Schnittstellenkopf (8) Mittel (57/67, 75/57, 77/82B) zur drehfesten Verbindung miteinander umfassen.

9. Stellglied nach einem der Ansprüche 7 oder 8, **dadurch gekennzeichnet, dass** das Getriebe (6), der Elektromotor (5) und die Steuereinheit (7) derart eingebaut sind, dass eine Möglichkeit zum axialen Gleiten (F5, F6, F7) im Inneren des Rohrs (4) gegeben ist.

10. Stellglied nach einem der Ansprüche 7 oder 8, **dadurch gekennzeichnet, dass** das erste Ende (41) des Rohrs (4) um das erste Ende (63A) des Getriebes (6) gecrimpt (300) ist.

11. Stellglied nach einem der Ansprüche 7 bis 10, **dadurch gekennzeichnet, dass** Mittel (54B, 76B) zur elektrischen Verbindung zwischen dem Motor (5) und der Steuereinheit (7) zusammengesteckt bleiben, wenn eine relative axiale Bewegung (F5, F7) des Motors und der Steuereinheit voneinander weg oder aufeinander zu erfolgt.

12. Stellglied nach einem der Ansprüche 7 bis 11, **dadurch gekennzeichnet, dass** das Getriebe (6), der Elektromotor (5) und/oder die Steuereinheit (7) an seinem/ihrem Umfang mit gleitend an einer radialen Innenfläche (48) des Rohrs (4) anliegenden elastischen Teilen (68) versehen sind/ist.

13. Anlage (200) zum Schließen oder zum Sonnenschutz oder zur Projektion, umfassend einen Behang (101), ein Wickelrohr (100) des Behangs und ein in dem Wickelrohr angeordnetes Stellglied (2) nach einem der Ansprüche 7 bis 12 in einer Ausgestaltung zum Drehantrieb des Rohrs um eine Rotationsachse (X-X').

## Claims

1. Method of assembling a tubular electrical actuator (2) for driving, about an axis of rotation (X-X'), a winding tube (100) of a screen (101) for closing, solar protection or projection, this actuator comprising at least:
- an electric motor (5),
- a reducer (6) driven by the electric motor,
- a unit (7) for controlling the electric motor,
- a head (8) for interface with a structure (103) forming a support and
- a tube (4), of circular section, for receiving the electric motor (5), the reducer (6), the control unit (7) and the interface head (8) in a configuration where an output shaft (61) of the reducer extends beyond a first end (41) of the tube and where the interface head (8) extends beyond a second end (42) of this tube opposite the first end,
**characterised in that** this method comprises steps consisting of:
a) providing, on the periphery of a first end (63A) of the reducer (6) turned towards its output shaft (61), at least one first relief (65) such that this end is not of circular section;
b) forming, outside the tube, an assembly (E) comprising, in this order, at least the reducer (6), the motor (5), the control unit (7) and at least one part (82) of the interface head (8), by making integral in rotation each of the elements of this assembly with each adjacent element;
c) introducing (F0), in the tube (4) and through its second end (42), the assembly (E) formed in step c), beginning with the reducer (6), until the output shaft (61) of the reducer extends from the first end (41) of the tube;
d) making integral in rotation the reducer (6) and the tube via a second relief (47), provided at the level of the first end (41) of the tube (4) and such that this end is not of circular section, so that the second relief (47) engages with the first relief (65).

2. Method according to claim 1, **characterised in that** the second relief (47) is formed on the tube (4) before insertion of the assembly (E) into the tube (4).

3. Method according to claim 1, **characterised in that** the second relief (47) is formed on the tube (4) following insertion of the assembly (E) into the tube (4), by plastic deformation of the tube according to the first relief (65).

4. Method according to one of the preceding claims, **characterised in that** it comprises a supplementary step, subsequent to step d) and consisting of:
f) Immobilising the interface head (8) in rotation relative to the tube (4), in the vicinity of the second end (42) of this tube.

5. Method according to one of the preceding claims, **characterised in that** it comprises a supplementary step, subsequent to step d) and consisting of:
g) taking up the axial plays within the assembly (E) formed in step b) by crimping (F300) of the first end (41) of the tube (4) about the first end (63A) of the reducer, or by insertion of a part (82) of the interface head (8) at the level of the second end of the tube (4).

6. Method according to one of the preceding claims, **characterised in that**, during step b), the assembly (E) is formed with a possibility of axial displacement (F5, F6, F7) relative to the constituent elements thereof, in particular between the electric motor (5) and the control unit (7).

7. Tubular electrical actuator (2) for driving, about an axis of rotation (X-X'), a winding tube (100) of a screen (101) for closing, solar protection or projection, this actuator comprising.
- an electric motor (5),
- a reducer (6) driven by the electric motor,
- a unit (7) for controlling the electric motor,
- a head (8) for interface with a structure (103) forming a support and
- a tube (4), of circular section, for receiving the electric motor (5), the reducer (6), the control unit (7) and the interface head (8) in a configuration where an output shaft (61) of the reducer extends beyond a first end (41) of the tube and where the interface head (8) extends beyond a second end (42) of this tube opposite the first end,
**characterised in that** the first end (41) of the tube is of non-circular section and engaged with a first end (63A) of the reducer (6) of non-circular section turned towards its output shaft (61), the tube and the reducer being integral in rotation about the axis (X-X'), at the level of their first respective ends.

8. Actuator according to claim 7, **characterised in that** the reducer (6), the electric motor (5), the control unit (7) and the interface head (8) comprise means in (57/67, 75/57, 77/82B) for integration in rotation one to the other.

9. Actuator according to one of the claims 7 or 8, **characterised in that** the reducer (6), the electric motor (5) and the control unit (7) are mounted with the possibility of axial sliding (F5, F6, F7) inside the tube (4).

10. Actuator according to one of the claims 7 or 8, **characterised in that** the first end (41) of the tube (4) is crimped (300) about the first end (63A) of the reducer (6).

11. Actuator according to one of the claims 7 to 10, **characterised in that** means (54B, 76B) for electrical connection between the motor (5) and the control unit (7) remain plugged in one to the other during a movement (F5, F7) of axial separation or approach relative to the motor and the control unit.

12. Actuator according to one of the claims 7 to 11, **characterised in that** the reducer (6), the electric motor (5) and/or the control unit (7) is provided, on its periphery, with elastic parts (68) which abut sliding against an internal radial surface (48) of the tube (4).

13. Facility (200) for closing, solar protection or projection comprising a screen (101), a winding tube (100) of this screen and an actuator (2) according to one of the claims 7 to 12 in place in the winding tube, in a configuration of driving this tube in rotation about an axis of rotation (X-X').
